# EUROPEAN PATENT APPLICATION

(11) **EP 3 920 112 A1**
(43) Date of publication of application: **08.12.2021**
(21) Application number: 20178246.3
(22) Date of filing: 04.06.2020
(51) Int. Cl.: G06Q 10/06

(54) **A METHOD FOR DISTRIBUTING WORK UNITS ACROSS MULTIPLE MICRO-JOB PLATFORMS, COMPUTER-READABLE MEDIUM AND SYSTEM**

(71) Applicant: ScaleHub AG, 22846 Norderstedt (DE)
(72) Inventor: Dubiner, Dan, 4000 Plovdiv (BG)
(74) Representative: Würmser, Julian

(57) **Abstract**

Shifting work between micro-job platforms is at present not easily possible. This problem is overcome by a method (100), comprising the following steps:
• Receiving (110) at least one micro-job-description (11), the at least one micro-job-description (11) comprising source-code (15) that provides a description of a task to be performed and input data (11) comprising a plurality of data elements (16, 16');
• Creating (120) a plurality of work units (12, 12') based on the at least one micro-job description (11) and being associated with at least one data element (16, 16');
• Assigning (130) a first set of work units (18) of the plurality of work units (18, 18', 18") to a first set of workers (8, 8', 8") of a first micro-job platform (6, 6', 6") and assigning (130) a second set of work units (18') of the plurality of work units (18, 18', 18") to a second set of workers (8, 8', 8') of a second micro-job platform (6, 6', 6") according to a distribution scheme (17);
• For each worker (8, 8', 8') of the first and second set of workers (8, 8', 8'), injecting (140) an inline frame (13) into source-code (15) of a website (19, 19') corresponding to the work unit (12, 12').

## Description

The invention relates to a method for distributing work units across multiple micro-job platforms, a respective computer-readable medium and a system for distributing work units across multiple micro-job platforms.

'Micro-jobs,' also known as 'micro-tasks,' 'crowd sourcing' or 'microwork' is the process of splitting a large job into smaller tasks that can be distributed to multiple parties online. Since the inception of micro-jobs, many online services have been developed that specialize in offering such services. This industry mainly relies on a global workforce composed of online users from around the world. Such an online user is also called a worker.

Typical tasks offered by these companies are usually repetitive in nature, require human judgment and cannot be automated - such as interpreting hand writing and data processing. Wages for this work can range from a few cents per task to hundreds of dollars per project. One such company that offers this service is known as Amazon Mechanical Turk which allows workers to choose and perform simple tasks online. The workers are paid directly through the platform depending on the number of tasks completed. A task can be as complex as algorithm writing or as simple as labeling photos or videos, describing products, or transcribing scanned documents. Employers submit tasks and set their own payments, which are often pennies for each task. This crowdsourcing project was initiated by Amazon as a way for users to find duplicate webpages, and soon it became a service for individuals to contract computer programmers and other individuals to finish tasks that computers are unable to accomplish.

As micro-jobs continue to become more popular, software engineers have been working on ways to streamline their efficiencies. One major problem is the lack of workers performing the micro-jobs. If one platform does not provide enough workers for a particular task, it is very difficult to complete the task in a short period of time. One remedy would be to increase the payment but this is not desired from a business perspective.

The publication EP2905729A1 discloses a system for allocating multiple tasks and subtasks on a single crowd sourcing platform. While EP2905729A1 addresses some productivity aspects, the original challenge remains unsolved.

The object of the present invention is thus how to reduce the processing time of a micro-job. In particular, it is an object of the present invention how to distribute work across a plurality of micro-job platforms. More in particular, an object of the present invention is how to fully utilize the available workforce across multiple micro-job platforms.

The object of the present invention is solved by a method according to claim 1, a computer-readable medium according to claim 12 and by a system according to claim 13.

The object is in particular solved by a method for distributing work units across multiple micro-job platforms, in particular a computer-implemented method, comprising the following steps:
- Receiving at least one micro-job-description, the at least one micro-job-description comprising source-code that provides a description of a task to be performed and input data comprising a plurality of data elements;
- Creating a plurality of work units based on the at least one micro-job description and being associated with at least one data element;
- Assigning a first set of work units of the plurality of work units to a first set of workers of a first micro-job platform and assigning a second set of work units of the plurality of work units to a second set of workers of a second micro-job platform according to a distribution scheme;
- For each worker of the first and second set of workers, injecting an inline frame into source-code of a website corresponding to the work unit.

A key benefit of the present invention lies in the fact that the invention enables using multiple and different micro-job platforms in an automatic way. Thus, a user that wants to have a task completed does not have to distribute work units to multiple micro-job platforms manually. This is in particular beneficial as each micro-job platform usually requires the implementation of different interfaces and following of specific standards so that the micro-job platform is able to process the micro-job description. Thus, it is technically not feasible to simply route different work units to different micro-job platforms. This problem is overcome by the present invention by using inline frames.

In the context of the present application, the term micro-job platform can either mean public platforms and/or private platforms and/or can relate to individual users.

An inline frames refers to the idea of injecting third party content into another webpage. In HTML 4.01 or HTML 5, as defined by the World Wide Web consortium (W3C), an inline frame is also called 'iframe'.

Using such an inline frame, the invention allows injecting source code of the job description into the work units that are associated with particular micro-job platforms. Thus, the micro-job platform is no longer serving the task to be completed but is merely serving a shell, which is used for monetary aspects by the micro-job platforms. The task itself is defined by the injected source code. In one embodiment, source code is HTML code and thus HTML code may be injected using the inline frame.

Moreover, the present invention utilizes existing resources more efficiently. As the work units are distributed to different micro-job platforms according to a distribution scheme, the risk of running into the problem of having no available workers is greatly reduced. The distribution scheme can, for example, determine that the total number of work units is split according to a pre-set ratio, e.g. 50:50, 60:40, 70:30 or 80:20 in case of only two micro-job platforms. In case of even more micro-job platforms, the ratio can be adapted accordingly.

In one embodiment, the injected source-code can correspond to the source-code of the job-description.

The above embodiment allows re-using the source code stored in the job-description and thus provides a very efficient way of injecting the respective source code wherein no further conversion of source code is required.

In one embodiment, the website corresponding to the work unit can be hosted by a micro-job platform.

A micro-job platform can host websites that workers use to complete the tasks that are defined by the at least one micro-job description. When injecting the inline frame, the website corresponding to the work unit may still be hosted by the micro-job platform even though the inline frame may be hosted by a different entity.

In one embodiment, the method can comprise the following steps:
- measuring a throughput of work units for each micro-job platform; and
- assigning a third set of workers to a third set of work units of the plurality of work units, the third set of workers selected based on the measured throughput.

It is thus possible to measure the efficiency of the distribution scheme by measuring the throughput and to assign further work units based on the measurement. The throughput can be defined as the number of tasks completed per time interval. The time interval can be, for example, 5, 10, 20, 30 40 or 60 minutes. Hence, the above embodiment enables the efficient routing of new work units and thus optimizing the distribution scheme based on the performance of each micro-job platform.

As a result, in case the first micro-job platform has not a sufficient number of free workers available, the method allows the automatic detection of this inefficiency and will automatically route new work units to a better performing micro-job platform.

In one embodiment, assigning the third set of workers can comprise determining that the first micro-job platform has a higher throughput than the second micro-job platform, wherein the workers of the third set of workers can be of the first micro-job platform.

Workers may be associated with a particular micro-job platform. Thus, in case the first micro-job platform performs better than the second micro-job platform, the method enables selecting workers of the first micro-job platform for additional work units.

In one embodiment, a work unit can comprise at least one HTML input element, wherein a work unit can be set into a COMPLETE state when a worker submits worker input by using the HTML input element.

In one embodiment, work units are initiated in an INCOMPLETE state, wherein the INCOMPLETE state indicates that work specified by the work unit is not yet completed. Once the task of the work unit is completed, the work unit may be set to a COMPLETE state.

In one embodiment, the work units of the third set of work units can be in an INCOMPLETE state when assigning the third set of workers to the third set of work units, wherein the INCOMPLETE state of a work unit can indicate that work specified by the work unit is not yet completed.

The above embodiment ensures that only work units in the INCOMPLETE state will be assigned to be processed by a worker. Thus, repetitive processing is prevented.

In one embodiment, the method can comprise the step of re-assigning work units that are in an INCOMPLETE state and that are assigned to a set of workers, in particular the first, the second and/or the third set of workers, to a fourth set of workers based on the measured throughput.

The above embodiment does not only allow for the adapted distribution of unassigned work units but also the re-assignment of work units. This has the great benefit that in case, for example, one micro-job platform is not performing well, idle work units, i.e. work units that are assigned to the workers of a micro-job platform but are not being currently being processed by a worker, can be re-assigned to a better performing micro-job platform.

As a result, the present embodiment can be regarded as a dynamic load balancer of work units across different micro-job platforms.

In one embodiment, the fourth set of workers can be associated with a micro-job platform different from a micro-job platform associated with work units in the INCOMPLETE state.

The above embodiment ensures that work units are assigned to workers of a micro-job platform that does not have any pending work units assigned. Thus, micro-job platforms are preferred that have more available capacity. As a result, the embodiment distributes the work efficiently.

In one embodiment, at least two work units can be associated with the same at least one micro job description and at least one data element. When the at least two work units are in a COMPLETE state, the worker input of the at least two work units can be compared to determine if a consensus between the two workers exists.

Using the above embodiment enables utilizing a consensus of two work units to determine if the worker input is 'correct'. For example, in one embodiment of character recognition, worker input is only considered to be 'correct' if at least two workers agree on a character shown in an image.

In case of associating at least two work units with the same at least one micro job description and the at least one data element, the method can further comprise assigning a third work unit associated with the at least one micro job description and the at least one data element, wherein the worker input of the third work unit determines a result for the at least one micro-job.

With the aforementioned embodiment, it is thus further possible to utilize a third worker to provide conflict resolution. In one embodiment, the third worker is associated with data fields that may store experience information. The third worker may be chosen based on the experience information stored in the data fields. Thus, it is further possible to select a very experienced worker to resolve conflicts between workers.

In one embodiment, it is further possible that the third worker is a worker of a third micro-job platform.

Consequently, it is even further possible that conflict resolution is performed by a worker that is of a different micro-job platform or even an in-house team member of an entity that created the micro-job description.

In the context of the present application, a worker can designate a user of a machine, e.g. of a personal computer or of a mobile phone, and/or a worker can designate the machine itself and/or a worker can designate a software running on a machine, e.g. a program. In case the worker designates a machine and/or software running on a machine, the worker can be implemented as program code stored on a computer-readable medium that can be executed by at least one processor of the machine. In one embodiment a worker may be implemented as an optical character recognition software.

In one embodiment, the method can comprise the following steps:
- serving a landing page to a user;
- the user defining the micro job-description using the landing page and in particular defining the number of work units to be created.

Users that may provide the micro-job description can be served a landing page. The landing page may comprise information on the status of work units, the throughput of the associated micro-job platforms and/or an indication of an expected remaining time. The expected remaining time may be computed based on the number of work units in the INCOMPLETE state and the throughput of the micro-job platforms. Moreover, in one embodiment, the user may define the micro-job description using the landing page. As a result, the user does not have to access the individual micro-job platform websites. This very comfortable to the user and also increases the speed with which the work can be performed.

In one embodiment, the method can comprise the following steps:
- Training an artificial intelligence entity based on the measured throughput of each of the micro-job platforms and/or a type of the task job-description and/or the input data;
- defining the distribution scheme using the artificial intelligence entity; and/or assigning a third set of workers to a third set of work units of the plurality of work units, the third set of workers selected by the artificial intelligence entity.

With the above embodiment it is even possible to use artificial intelligence to improve the performance of the processing of the work units. For example, the artificial intelligence entity may be implemented as a regression entity that is trained to predict throughput. Using such a technique, the distribution scheme can be initialized with learned values that are specific to the input data and/or the tasks to be performed by the workers.

The artificial intelligence system can be implemented, for example, using an artificial neural network. In particular, a convolutional neural network can be used. Still, other implementations, such as bayesian networks, are also possible.

The object is further in particular solved by a computer-readable medium storing instructions that when executed by at least one processor implement a method as described above.

The computer-readable medium can be implemented as a distributed storage medium that resides on multiple physical storage media, for example a hard disk, RAM, ROM, a data center or multiple data centers.

The object is further in particular solved by a system for distributing work units across multiple micro-job platforms, the system comprising:
- a receiving unit, the receiving unit adapted to receive at least one micro-job description, the at least one micro-job description comprising source code that provides a description of a task to be performed and input data comprising a plurality of data elements;
- a creation unit, the creation unit adapted to create a plurality of work units based on the at least one micro-job description and being associated with at least one data element;
- an assignment unit, the assignment unit adapted to assign a first set of work units of the plurality of work units to a first set of workers of a first micro-job platform and adapted to assign a second set of work units of the plurality of work units to a second set of workers of a second micro-job platform according to a distribution scheme;
- an injection unit adapted, for each worker of the first and second set of workers, to inject an inline frame into a source-code of a website corresponding to the work unit.

In one embodiment, the system can comprise at least one first server that may be adapted to host a first micro-job platform and at least one second server that may be adapted to host a second micro-job platform, wherein workers of the first micro-job platform can be adapted to access work units through the at least one first server and workers of the second micro-job platform can be adapted to access the second micro-job platform through the at least one second server.

In one embodiment, the system can comprise at least one worker system associated with a worker of a micro-job platform, wherein the at least one worker system can be communicatively coupled to the micro-job platform of the worker.

In one embodiment, the system can comprise a measuring unit that may be adapted to measure a throughput of work units for each micro-job platform, wherein the assignment unit can be further adapted to assign a third set of workers to a third set of work units of the plurality of work units, the third set of workers selected can be based on the measured throughput.

In one embodiment, the assignment unit can be further adapted to determine that the first micro-job platform has a higher throughput than the second micro-job platform, wherein the third set of workers can be of the first micro-job platform.

In one embodiment, the system can comprise a state unit adapted to set a state of a work unit, wherein a work unit can comprise at least one HTML input element, wherein the state unit can be adapted to set a work unit into a COMPLETE state when a worker submits input by using the HTML input element.

In one embodiment, the work units of the third set of work units can be in an INCOMPLETE state when the assignment unit assigns the third set of workers to the third set of work units, wherein the INCOMPLETE state of a work unit can indicate that work specified by that work unit is not yet completed.

In one embodiment, the assignment unit can be further adapted to re-assign work units that are in an INCOMPLETE state and that may be assigned to a set of workers, in particular the first, the second and/or the third set of workers, to a fourth set of workers, for example based on the measured throughput.

In one embodiment, the system can comprise;
- a web-server that can be adapted to serve a landing page to a user of the system;
- the landing page can be adapted to define the micro job-description and in particular the number of work units to be created by the creation unit.

In one embodiment, the system can comprise an artificial intelligence unit that can be adapted to train an artificial intelligence entity based on the measured throughput of each of the micro-job platforms and/or a type of the micro job-description and/or the input data and can be adapted to define the distribution scheme using the artificial intelligence entity.

In one embodiment, the assignment unit can be adapted to assign a third set of workers to a third set of work units of the plurality of work units, wherein the artificial intelligence unit can be adapted to select the third set of workers.

The above embodiments have similar advantages as the described method.

Further embodiments result from the dependent claims.

In the following and the accompanied figures, the invention is illustrated by further examples. What is shown is:
- Figure 1:: an illustrative schematic of a system for distributing work units across multiple micro-job platforms;
- Figure 2:: a more detailed illustration of the entities making up the system for distributing work units across multiple micro-job platforms;
- Figure 3:: an illustration of the creation of work units from a job description;
- Figure 4:: an illustration of assigning work units to workers;
- Figure 5:: an illustration of re-assigning work units;
- Figure 6:: a flow chart of a method for distributing work units across multiple micro-job platforms; and
- Figure 7:: a flow chart illustrating the training and using of an artificial intelligence unit.

In the following, like parts are denoted with like reference numerals.

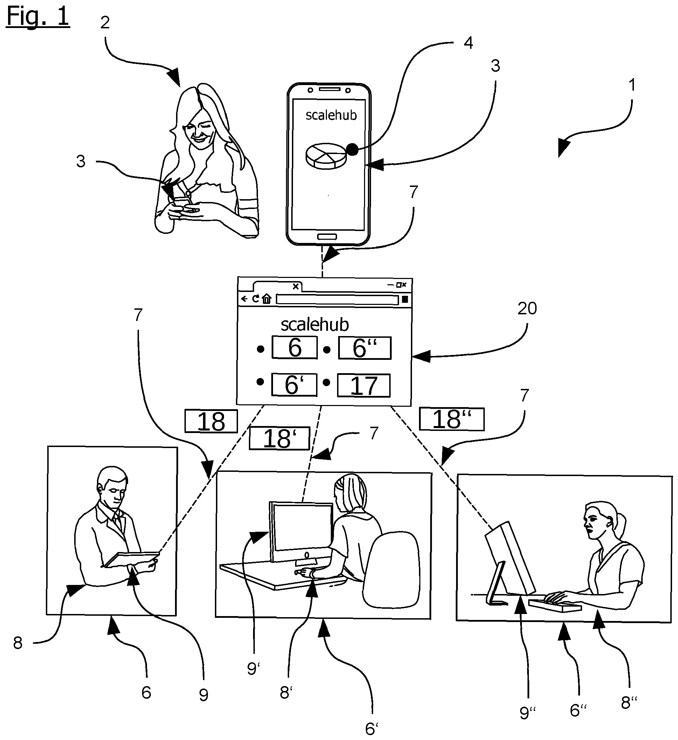

Figure 1 illustrates a system for distributing work units across multiple micro-job platforms 1. The system 1 can be used by a user 2 that can use a handheld device 3, such as mobile phone 3, to access a landing page 4 using a standard web-browser. Thus, the user 2 can also use any other device capable of executing a web browser.

The landing page 4 provides information on micro-jobs that are being administered by the user 2. Furthermore, the landing page 4 indicates statistics on active micro-jobs. For example, the landing page 4 provides an overview of completed, incomplete and pending work.

The mobile phone 3 is communicatively coupled to a server 20, wherein a communication link 7 is used to communicate. The communication link 7 may be implemented as a direct communication link between the server 20 and the mobile phone 3, either wired or wireless. Moreover, the communication link 7 may be implemented as a network, for example the internet or a telephone network.

The server 20 is running a webserver serving the landing page 4. Furthermore, the server 20 is communicatively coupled to three micro-job platforms 6, 6', 6". Each micro-job platform 6, 6', 6" provides access to workers 8, 8', 8" that work on jobs assigned to them for a monetary compensation. The workers 8, 8', 8" have a worker system 9, 9', 9", such as a regular desktop computer or laptop, to work on the assigned jobs. As such, in this application, the term worker 8, 8', 8" and worker system 9, 9', 9" will be used interchangeably.

The user 2 can use its mobile phone 3 or any other device to access the landing page 4 to define a micro-job description which defines the tasks to be performed by workers 8, 8', 8".

The server 20 receives the micro-job description via the communication link 7 and determines a number of required workers to perform the tasks defined by the micro-job description. Based on the required number, the server 20 creates work units that are grouped as sets based on a pre-set distribution scheme 17.

The distribution scheme 17 indicates how the work units are to be distributed among available micro-job platforms 6, 6', 6". In the illustrated example, the server 20 creates three sets of work units 18, 18', 18" that are assigned to different micro-job platforms 6, 6', 6". The size of the sets 18, 18', 18", i.e. the number of work units comprised in the set, is set based on the distribution scheme 17.

The distribution scheme 17 can be pre-set. In one example, the distribution scheme 17 is set by the user 2 using the landing page 4.

Once the sets of work units 18, 18', 18" are created, the sets of work units 18, 18', 18" are transferred to the respective micro-job platforms 6, 6', 6" using a respective communication link 7.

Once received, the work units of the sets 18, 18', 18" are assigned to workers 8, 8', 8" of the respective micro-job platform 6, 6', 6" to be processed.

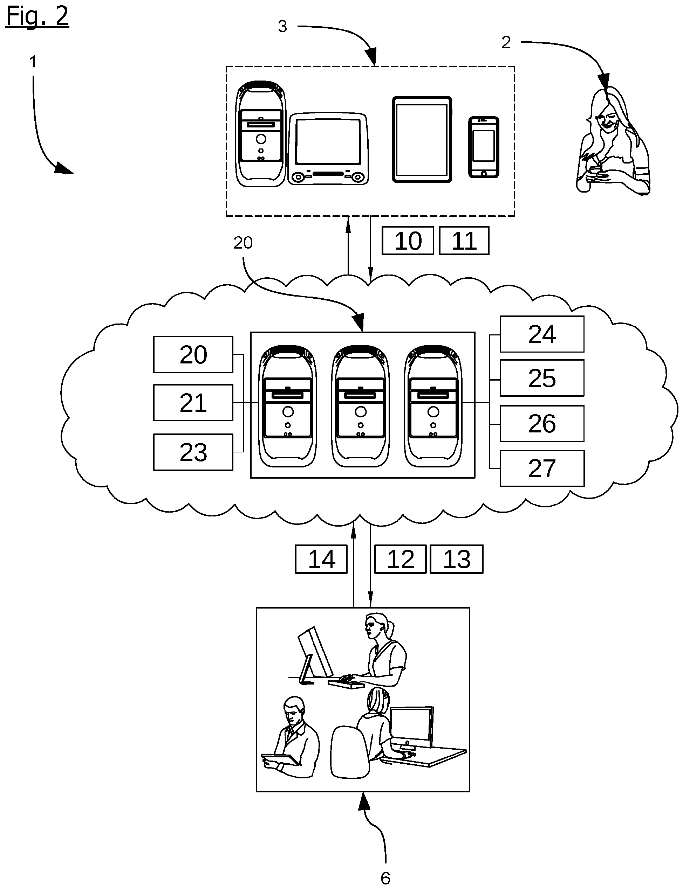

Figure 2 illustrates the different components of the system 1 in more detail. As stated above, a user 2 may access a landing page 4 using a device 3, such as a mobile handset, a tablet, a laptop or a desktop computer. The user 2 provides a micro-job description 10 and, in case required for the task, input data 11. For example, in case of annotating pictures, the micro-job description 10 may contain source code that defines a website that indicates a question and potential answers, e.g. categories of pictures in a picture annotation task. Moreover, the input data 11 may represent the pictures to be annotated.

The micro-job description 10 along with the input data 11 are transferred to the server 20 for further processing. Server 20 comprises a receiving unit 20 for receiving the micro-job description 10 along with the input data 11. In addition, server 20 comprises a creation unit 21 which is adapted to create work units 12 that each indicate a task to be performed by a worker of a micro-job platform 6.

Work units 12 comprise at least one data element of the input data 11. In case multiple images are to be classified by a worker, multiple images could be included in the work unit 12 as well. In addition, the work unit 12 comprises HTML code that, when interpreted by a web browser, provides a graphical user interface to work on the tasks defined by the work units. For example, the HTML code may comprise a question section stating the task in natural language. Moreover, the HTML code may comprise a presentation section that shows an image to be classified. An answer section of the HTML code may provide potential answers, like categories of images. An input section of the HTML code provides at least one HTML input element so a user may indicate an answer to the task posed in the question section.

An assignment unit 23 of the server 20 assigns the work units 12 to workers of the micro-job platforms 6. In the context of this application, assigning work units 12 to workers of a micro-job platform 6 can also mean assigning work units 12 to a specific number of workers of a micro-job platform 6.

The work units 12 are subsequently transferred to the respective micro-job platforms 6. Depending on the required number of workers, the micro-job platform 6 will create proprietary elements that are used by the micro-job platform 6 that account for monetary aspects of the workers and that are also used to display the tasks to the workers. In the present case, a website is used by the micro-job platform 6 to interact with the worker. An injecting unit 24 is adapted to inject an inline frame into the website of the proprietary elements corresponding to the work unit 12. The content of the inline frame is hosted on server 20. Thus, the worker will interface server 20 through the website into which the inline frame was injected.

In order to allow for injecting the inline frame, the micro-job platform 6 may provide a programmable application interface (API) that can be used by the injecting unit 24 to inject the inline frame.

While workers of the micro-job platform 6 are working on the assigned work units 12, the workers provide input 14 which indicates if a work unit 12 has been completed. To monitor the status of a work unit, the work unit may be in at least one of two states: INCOMPLETE or COMPLETE. When initialized, all work units 12 are in the INCOMPLETE state. Once a worker has finished working on a work unit 12 and submitted input 14, the state is changed to COMPLETE. For changing between the states, the server 20 comprises a state unit 26

Server 20 further comprises a measuring unit 25 that is adapted to measure the number of completed tasks in a time interval for each micro-job platform 6, the throughput 17. In case a micro-job platform 6 is lagging behind the other micro-job platforms 6, i.e. the throughput is lower, the assignment unit 23 may adapt the distribution scheme 17 so that fewer or no further work units 12 are assigned to the lagging micro-job environment 6.

The distribution scheme 17 can further be improved by using artificial intelligence unit 27. Artificial intelligence unit 27 can be trained using throughput data and work units. The artificial intelligence unit 27 can thus be trained to predict the throughput of a micro-job platform 6 for specific types of work units. As a result, the distribution scheme 17 can the set based on a predicted throughput time and the available micro job-platform 6. Another benefit of using the artificial intelligence unit 27 is the ability to share experience with other users 2. Thus, the data of multiple users 2 can be used to train the artificial intelligence unit 27 to provide more accurate estimations.

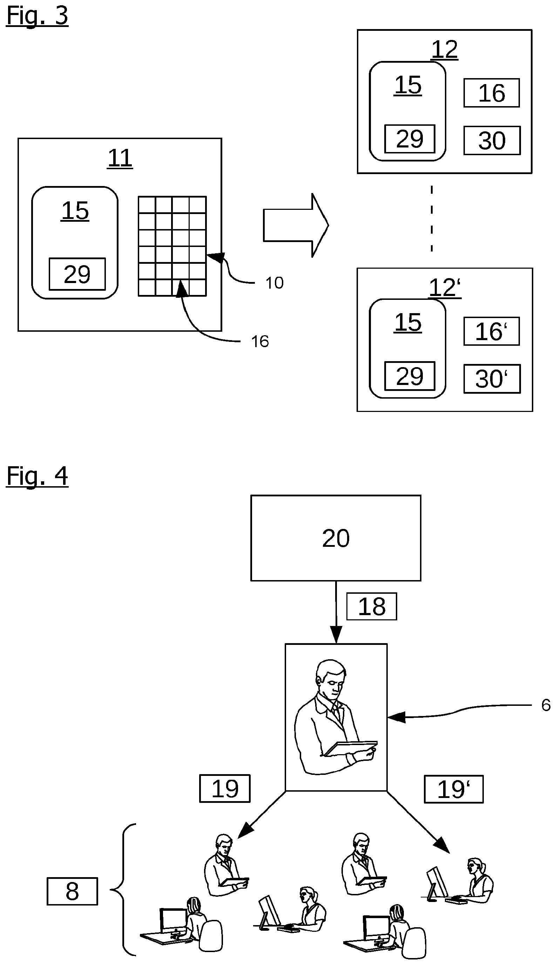

Figure 3 illustrates the data structure used to represent a micro-job description 11 as well as work units 12, 12'. The micro-job description 11 comprises source code 15 that may include at least one HTML input element 29. In addition, the micro-job description 11 comprises input data 10. Input data 10 comprises a plurality of data elements 16. The data elements 16 may be for example, images, sound files, text snippets or any other conceivable data.

As mentioned above, the creation unit 22 is adapted to create work units 12, 12' based on the micro-job description 11. This process is illustrated with figure 3. Each work unit 12, 12' may comprise source code 15 that may be equal to the source code 15 of the micro-job description 11. Thus, the source code 15 of the work units 12, 12' also includes the HTML input element 29. In contrast to the micro-job description 11, however, the work units 12, 12' each comprise a subset, i.e. one or more, of the data elements 16, 16' of the input data 10. Thus, the work units 12, 12' indicate on which data element 16, 16' a worker will work.

As is evident from Figure 4, the server 20 may send a set of work units 18 to a selected micro-job platform 6. The micro-job platform 6 creates websites 19, 19' that correspond to the work units 12, 12', wherein the inline frame 13 is injected into the websites 19, 19'. A worker 8 receives the website 19, 19' that corresponds to the work unit 12, 12' and will work on the task.

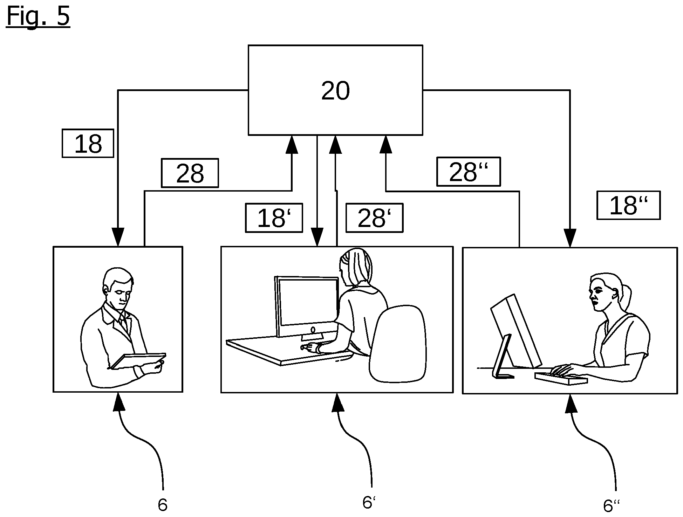

Figure 5 illustrates the load balancing aspects of the server 20. In the example shown in figure 5, sets of work units 18, 18', 18" are assigned to workers 8, 8', 8" of three micro-job platforms 6, 6', 6". While the workers 8, 8', 8" are working on the work units 12, 12', throughput data 28, 28', 28" is send to the server 20 that determines the throughput for each micro-job platform 6, 6', 6".

Based on the determined throughput, the server 20 balances the load by re-assigning work units of the sets of work units 18, 18', 18" to different micro-job platforms 6, 6', 6". For example, a micro-job platform 6, 6', 6" with the biggest throughput will receive the most work units 12, 12'. The micro-job platform 6, 6', 6" with the lowest throughput will receive the least work units 12, 12', 12".

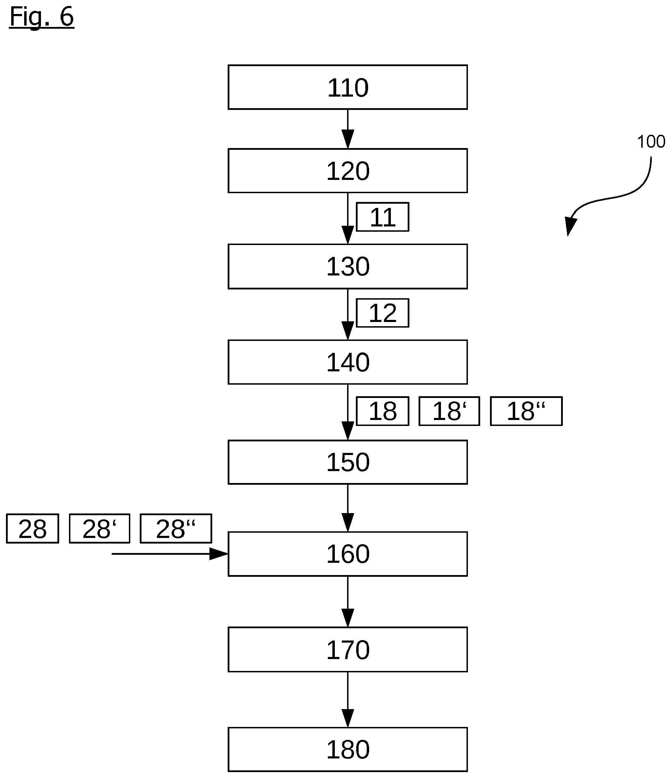

Figure 6 is a flow chart illustrating a method 100 for distributing work units 12, 12' across multiple micro-job platforms 6, 6', 6". In a serving step 110, a landing page 4 is served to a device 3 of a user 2. In a receiving step 120, at least one micro-job description 11 is received. In a subsequent creating step 130, work units 12 are created based on the at least one micro-job description 11.

Next, the sets of work units 18, 18', 18" are assigned to workers 8, 8', 8" of respective micro-job platforms 6, 6', 6" according to a distribution scheme 17.

In an injecting step 150, an inline frame 13 is injected into the source code 15 of a website 19, 19' corresponding to the work unit 12. The duration 28, 28', 28" it takes to complete a work unit 12 is recorded in a measuring step 160 to measure a throughput. During a determining step 170, it is determined which micro-job platform 6, 6', 6" should receive further work units 12 and which platform 6, 6,', 6" should have less work units 12 assigned to its workers 8, 8', 8". Thus, in a re-assigning step, work units 12 of a less performing micro-job platform 6, 6', 6" are re-assigned to a better performing micro-job platform 6, 6', 6", i.e. a platform 6, 6', 6" with a higher throughput.

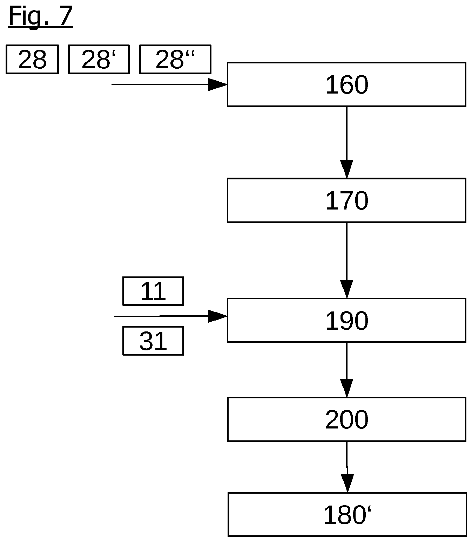

Figure 7 illustrates using artificial intelligence to improve the distribution of work units 12 across multiple micro-job platform 6, 6', 6".

The flow chart illustrated in figure 7 thus augments the flow chart of figure 6. The steps 160 and 170 are similar to the chart of figure 6. In a training step 190, an artificial intelligence entity 31 is trained using the micro-job description 11 as well as the throughput time as determined in the determining step 160. The trained artificial intelligence entity 31 is then used in defining step 200, to define or amend a distribution scheme 17 according to which workers 8, 8', 8" are re-assigned to work units 12 in a re-assigning step 180', similar to the re-assigning step 180 of figure 6.

It is additionally noted and anticipated that although the device is shown in its most simple form, various components and aspects of the device may be differently shaped or slightly modified when forming the invention herein. As such those skilled in the art will appreciate the descriptions and depictions set forth in this disclosure or merely meant to portray examples of preferred modes within the overall scope and intent of the invention, and are not to be considered limiting in any manner. While all of the fundamental characteristics and features of the invention have been shown and described herein, with reference to particular embodiments thereof, a latitude of modification, various changes and substitutions are intended in the foregoing disclosure and it will be apparent that in some instances, some features of the invention may be employed without a corresponding use of other features without departing from the scope of the invention as set forth. It should also be understood that various substitutions, modifications, and variations may be made by those skilled in the art without departing from the scope of the invention.

### Reference numerals:

- 1: system for distributing work units across multiple micro-job platforms
- 2: user
- 3: user system / mobile device
- 4: landing page
- 5: Web-browser
- 6, 6', 6': micro-job platform
- 7: communication link
- 8, 8', 8": worker
- 9, 9', 9": worker system
- 10: input data
- 11: micro-job description
- 12, 12': work units
- 13: inline frame
- 14: worker input
- 15: source code
- 16, 16': data element
- 17: distribution scheme
- 18, 18', 18": set of work units
- 19, 19': website corresponding to a work unit
- 20: server/web-server
- 21: receiving unit
- 22: creation unit
- 23: assignment unit
- 24: injection unit
- 25: measuring unit
- 26: state unit
- 27: artificial intelligence unit
- 28, 28', 28": throughput
- 29: HTML input element
- 30, 30': state
- 31: artificial intelligence entity
- 100: method for distributing work units across multiple micro-job platforms
- 110: serving step
- 120: receiving step
- 130: creating step
- 140: assigning step
- 150: injecting step
- 160: measuring step
- 170: determining step
- 180, 180': re-assigning step
- 190: training step
- 200: defining step

## Claims

1. A method (100) for distributing work units (12, 12') across multiple micro-job platforms (6, 6', 6'), comprising the following steps:
• Receiving (110) at least one micro-job-description (11), the at least one micro-job-description (11) comprising source-code (15) that provides a description of a task to be performed and input data (11) comprising a plurality of data elements (16, 16');
• Creating (120) a plurality of work units (12, 12') based on the at least one micro-job description (11) and being associated with at least one data element (16, 16');
• Assigning (130) a first set of work units (18) of the plurality of work units (18, 18', 18") to a first set of workers (8, 8', 8") of a first micro-job platform (6, 6', 6") and assigning (130) a second set of work units (18') of the plurality of work units (18, 18', 18") to a second set of workers (8, 8', 8') of a second micro-job platform (6, 6', 6") according to a distribution scheme (17);
• For each worker (8, 8', 8') of the first and second set of workers (8, 8', 8'), injecting (140) an inline frame (13) into source-code (15) of a website (19, 19') corresponding to the work unit (12, 12').

2. The method (100) according to claim 1,
**characterized in that**
the injected source-code (15) corresponds to the source-code (15) of the job-description (11).

3. The method (100) according to any of the preceding claims,
**characterized in that**
the website (19, 19') corresponding to the work unit (12, 12') is hosted by a micro-job platform (6, 6', 6").

4. The method (100) according to any of the preceding claims, **characterized by**
• measuring (160) a throughput (28, 28', 28") of work units (12, 12') for each micro-job platform (6, 6', 6"); and
• assigning (130) a third set of workers (8, 8', 8") to a third set of work units (18"') of the plurality of work units (18, 18', 18"), the third set of workers (8, 8', 8") selected based on the measured throughput (28, 28', 28").

5. The method (100) according to any of the preceding claims, in particular according to claim 4,
**characterized in that**
assigning (130) the third set of workers (18") comprises determining (170) that the first micro-job platform (6) has a higher throughput (28) than the second micro-job platform (6'), wherein the workers (8, 8', 8") of the third set of workers (18") are of the first micro-job platform (6).

6. The method (100) according to any of the preceding claims, **characterized in that**
a work unit (12, 12') comprises at least one HTML input element (29), wherein a work-unit (12, 12') is set into a COMPLETE state (30, 30') when a worker (8, 8', 8") submits worker input by using the HTML input element (29).

7. The method (100) according to any of the preceding claims, in particular according to claim 4,
**characterized in that**
the work units (12, 12') of the third set of work units (18") are in an INCOMPLETE state (30, 30') when assigning (130) the third set of workers (8, 8', 8") to the third set of work units (18"), wherein the INCOMPLETE state (30, 30') of a work unit (12, 12') indicates that work specified by the work unit (12, 12') is not yet completed.

8. The method (100) according to any of the preceding claims, in particular according to claims 4 to 7,
**characterized by**
re-assigning (180, 180') work units (12, 12') that are in an INCOMPLETE state (30, 30') and that are assigned to a set of workers (18, 18', 18"), in particular the first, the second and/or the third set of workers (18, 18', 18"), to a fourth set of workers based on the measured throughput (28, 28', 28").

9. The method (100) according to any of the preceding claims, in particular according to claim 8,
**characterized in that**
a/the fourth set of workers is associated with a micro-job platform (6, 6', 6") different from a micro-job platform (6, 6', 6") associated with work units (12, 12') in the INCOMPLETE state (30, 30').

10. The method (100) according to any of the preceding claims, **characterized by**
• serving (110) a landing page (4) to a user (2);
• the user (2) defining the micro job-description (11) using the landing page (4) and in particular defining the number of work units (12, 12') to be created.

11. The method (100) according to any of the preceding claims, in particular according to claim 4,
**characterized by**
• Training (190) an artificial intelligence entity (31) based on the measured throughput (28, 28', 28") of each of the micro-job platforms (6, 6', 6") and/or a type of the task job-description (11) and/or the input data (10);
• defining (200) the distribution scheme (17) using the artificial intelligence entity (31); and/or assigning (180') a third set of workers (8, 8', 8") to a third set of work units (18") of the plurality of work units (18, 18', 18"), the third set of workers (18") selected by the artificial intelligence entity (31).

12. A computer-readable medium storing instructions that when executed by at least one processor implement a method according to any of preceding claims.

13. A system (1) for distributing work units (12, 12') across multiple micro-job platforms (6, 6', 6"), the system comprising:
• a receiving unit (21), the receiving unit (21) adapted to receive at least one micro-job description (11), the at least one micro-job description (11) comprising source code (15) that provides a description of a task to be performed and input data (10) comprising a plurality of data elements (16, 16');
• a creation unit (22), the creation unit (22) adapted to create a plurality of work units (12, 12') based on the at least one micro-job description (11) and being associated with at least one data element (16, 16');
• an assignment unit (23), the assignment unit (23) adapted to assign a first set of work units (18) of the plurality of work units (18, 18', 18") to a first set of workers (8, 8', 8") of a first micro-job platform (6) and adapted to assign a second set of work units (18') of the plurality of work units (18, 18', 18") to a second set of workers (8, 8', 8") of a second micro-job platform (6') according to a distribution scheme (17);
• an injection unit (24) adapted, for each worker (8, 8', 8") of the first and second set of workers (18, 18'), to inject an inline frame (13) into a source-code (15) of a website (19, 19') corresponding to the work unit (12, 12').

14. A system (1) according to claim 13,
**characterized by**
at least one first server adapted to host a first micro-job platform (6) and at least one second server adapted to host a second micro-job platform (6'), wherein workers (8, 8', 8") of the first micro-job platform (6) are adapted to access work units (12, 12') through the at least one first server and workers (8, 8', 8") of the second micro-job platform (6') are adapted to access the second micro-job platform (6') through the at least one second server.

15. A system (1) according to any of the claims 13 to 14, in particular according to claim 14
**characterized by**
at least one worker system (9, 9', 9") associated with a worker (8, 8', 8") of a micro-job platform (6, 6', 6"), wherein the at least one worker system (9, 9', 9") is communicatively coupled to the micro-job platform (6, 6', 6") of the worker (8, 8', 8").
